# EUROPÄISCHE PATENTSCHRIFT

(11) **EP 0 443 091 B1**
(45) Veröffentlichungstag und Bekanntmachung des Hinweises auf die Patenterteilung: **11.05.1994**
(21) Anmeldenummer: 90119779.8
(22) Anmeldetag: 16.10.1990
(51) Int. Cl.: G01N 27/16

(54) **Katalytisch inaktives Gasspürelement und Verfahren zu seiner Herstellung**
Catalytically inactive gas sensor and production process
Capteur de gaz catalytiquement inactif et procédé de sa production

(30) Priorität: 19.02.1990 DE 4004977
(43) Veröffentlichungstag der Anmeldung: 28.08.1991
(73) Patentinhaber: AUERGESELLSCHAFT GMBH, D-12059 Berlin (DE)
(72) Erfinder: Mähl, Dieter, Dr., W-1000 Berlin 20 (DE); Bodur, Fatma, W-1000 Berlin 61 (DE)

(56) Entgegenhaltungen:
- EP-A- 0 062 466
- DE-B- 1 197 251
- DE-C- 881 845
- PATENT ABSTRACTS OF JAPAN, Band 7, Nr. 216 (P-225)[1361], 24. September 1983;& JP-A-58 109 845
- PATENT ABSTRACTS OF JAPAN, Band 6, Nr. 75 (P-114)[953], 12. Mai 1982;& JP-A-57 12 358

## Beschreibung

Die Erfindung betrifft ein katalytisch inaktives Gasspürelement für Gasmeßgeräte, bestehend aus einer eine Heizwendel einschließenden Keramikperle aus feuerfestem Material, wobei auf der Perle ein katalytisch inaktiver Überzug angeordnet ist, sowie ein Verfahren zur Herstellung eines solchen Elementes.

Bei einem bekannten katalytisch inaktiven Gasspürelement der gattungsgemäßen Art, ist die Heizwendel in eine Pille aus feuerfestem Material eingebettet, wobei auf der Pille ein weiterer Metalloxidüberzug, beispielsweise aus Chromoxid, vorgesehen ist, welcher katalytisch inaktiv ist und eine Oxidation brennbarer Gasanteile an dem Gasspürelement verhindert (DE-AS 11 97 251). Bei einem derartigen Gasspürelement ist jedoch die katalytische Inaktivitat nicht für ein breites Anwendungsspektrum bei brennbaren Gasen bzw. Dampfen gewährleistet. Bei dem genannten Gasspürelement findet u. a. eine Umsetzung von Methanol statt, was zur Folge hat, daß sich die Meßempfindlichkeit verändern und in einem weiten Bereich streuen kann. Dies führt zu einer nachteiligen Senkung des verwertbaren Brückensignals (Gassignals).

Der Erfindung liegt daher die Aufgabe zugrunde, ein katalytisch inaktives Gasspürelement zu schaffen und derart auszubilden, daß dieses in keinem Anwendungsfall eine katalytische Aktivität aufweist.

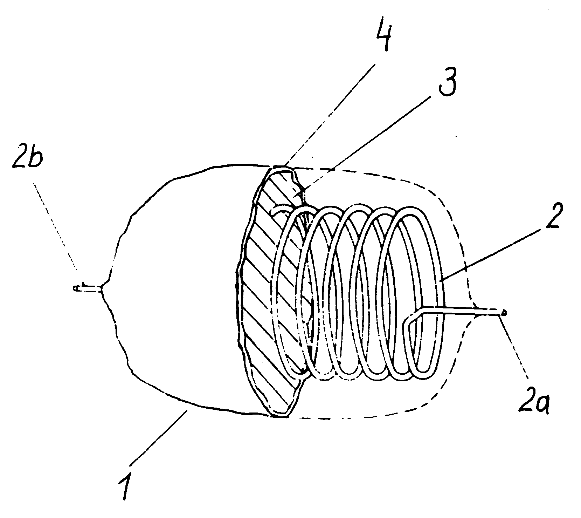

Diese Aufgabe wird erfindungsgemäß bei einem katalytisch inaktiven Gasspürelement der eingangs genannten Art durch die kennzeichnenden Merkmale im Anspruch 1 sowie durch ein Verfahren zu seiner Herstellung mit den im Anspruch 5 angegebenen Merkmalen gelöst. Vorteilhafte Weiterentwicklungen sind in den abhängigen Ansprüchen angegeben. Die mit dem Erfindungsgegenstand erzielte vorteilhafte ständige Beibehaltung der Inaktivität für das Gasspürelement ist offenbar mit der Herstellung und dem besonderen Aufbau der Keramikperle aus der erfindungsgemäßen Suspension als Stützgerüst für die Heizwendel und der nachfolgenden Versiegelung der Perlenoberfläche mittels des katalytisch inaktiven Glasüberzuges zu erklären, so daß der Keramikkörper einerseits eine hohe mechanische Stabilität und andererseits eine rißfreie gleichmäßig ausgebildete Oberflächenstruktur aufweist. Hierdurch wird die Wirksamkeit und Beibehaltung der katalytischen Inaktivität des Gasspürelementes gewährleistet. Das ist deshalb besonders wichtig, weil das katalytisch inaktive Gasspürelement als Ausgleichselement in Zusammenhang mit einem katalytisch aktiven Gasspürelement dient, und auf seiner Oberfläche keine brennbaren Gasbestandteile oxidieren dürfen. Ein Ausführungsbeispiel der Erfindung ist in der einzigen Figur dargestellt, die eine teilweise geschnittene perspektivische Ansicht eines vorgeschlagenen katalytisch inaktiven Gasspürelementes zeigt.

Wie aus der Figur ersichtlich ist, besteht das Gasspürelement 1 im wesentlichen aus einer Heizwendel 2, die vorzugsweise aus Platin oder einer Platinlegierung sein kann, einer die Heizwendel 2 als Stützgerüst vollständig umgebenden Keramikperle 3, die aus einem feuerfesten Material besteht, und aus einem die Keramikperle allseitig umschließenden Glasüberzug 4. Die Enden 2a und 2b der Heizwendel 2 ragen jeweils aus dem Glasüberzug 4 heraus und dienen zum elektrischen Anschluß des Gasspürelementes 1 innerhalb einer Schaltungs-Meßanordnung eines Gasmeßgerätes.

Nachfolgend wird das Verfahren zur Herstellung des Erfindungsgegenstandes beschrieben: Der Heizwendeldraht aus Platindraht mit einem Durchmesser von 50 µm und beispielsweise 15 bzw. 16 Windungen wird in einen Träger geklemmt und mit einer Suspension betropft, die vorzugsweise aus einem bis zu 75prozentigem Feststoffanteil eines Gemisches aus α-Aluminiummonohydrat (Boehmit) und einem Restanteil eines Mineralsäurezusatzes besteht. Dabei sollten 50 % des Feststoffanteils eine durchschnittliche Teilchengröße kleiner als 1 µm aufweisen. Nach dem Auftropfen der Suspension wird diese getrocknet und anschließend rotglühend aufgeheizt. Danach wird ein weiterer Tropfen der Suspension aufgebracht und der Heizvorgang wiederholt. Die derart hergestellte Keramikperle 3 weist eine hohe mechanische Stabilität auf und zeigt eine homogene Oberfläche, die zur Inaktivierung des Gasspürelementes mit einem Glasüberzug versehen wird. Die Verglasung erfolgt mittels einer verdünnten Fritte, die zweimal auf die Oberfläche der Keramikperle 3 aufgetragen wird. Es ist darauf zu achten, daß die Perle vollständig von dem Glasüberzug ummantelt ist. Um dies zu erreichen, wird vorteilhaft ein Tropfen Fritte von oben auf die Perle gegeben und anschließend bei 800 bis 900 °C eingebrannt, und der Vorgang von der anderen Seite wiederholt. Dabei diffundiert ein Teil des katalytisch inaktiven Glasüberzuges 4, dessen linearer Ausdehnungskoeffizient dem der Keramikperle 3 angepaßt ist, in die glatte Oberfläche der Keramikperle 3 hinein und bewirkt mit dieser einen festen gleichmäßig ausgebildeten Verbund. Es hat sich herausgestellt, daß durch eine verfestigte bzw. einen festen Verbund aufweisende und gleichmäßig ausgebildete Oberfläche des Gasspürelementes (Pellements) die erforderliche katalytische Inaktivität ständig aufrechterhalten bleibt und nicht verloren geht. Damit wird auch die erforderliche Meßempfindlichkeit des Gasspürelementes (Pellements) unveränderbar beibehalten.

## Patentansprüche

1. Katalytisch inaktives Gasspürelement für Gasmeßgeräte, bestehend aus einer eine Heizwendel einschließenden Keramikperle aus feuerfestem Material, wobei auf der Perle ein katalytisch inaktiver Überzug angeordnet ist, dadurch gekennzeichnet, daß
a) die Keramikperle (3) aus einem Material besteht, das durch Trocknen und Heizen einer Suspension mit einem bis zu 75prozentigem Feststoffanteil eines Metalloxids und einem Restanteil eines Mineralsäurezusatzes besteht, und
b) der katalytisch inaktive Überzug ein Glasüberzug (4) ist, dessen Linearer Ausdehnungskoeffizient dem der Keramikperle (3) angepaßt ist.

2. Katalytisch inaktives Gasspürelement nach Anspruch 1, dadurch gekennzeichnet, daß der Feststoffanteil der Keramikperle (3) ein Gemisch aus α-Aluminiummonohydrat ist, bei dem mindestens 50% der Teilchen eine durchschnittliche Teilchengröße kleiner als 1 µm aufweist.

3. Katalytisch inaktives Gasspürelement nach Anspruch 1 und 2, dadurch gekennzeichnet, daß der Feststoffanteil der Keramikperle (3) ein Gemisch aus α-Aluminiummetahydroxid ist.

4. Katalytisch inaktives Gasspürelement, dadurch gekennzeichnet, daß als Glasüberzug (4) eine Fritte verwendet wird, die eine Einbrenntemperatur von vorzugsweise 800 bis 900 °C besitzt.

5. Verfahren zur Herstellung eines katalytisch inaktiven Gasspürelementes, gekennzeichnet durch folgende Verfahrensschritte, daß
a) eine Heizwendel (2) in einen Träger eingespannt und mit einer Suspension, die aus einem bis zu 75prozentigem Feststoffanteil eines Metalloxids und einem Restanteil eines Mineralsäurezusatzes besteht, betropft und anschließend getrocknet sowie rotglühend aufgeheizt wird, um eine Perle (3) aus Keramikmaterial zu bilden, und
b) auf die Keramikperle (3) von oben eine Schutzglasur aufgetropft und anschließend bei einer Temperatur von vorzugsweise 800 bis 900 °C eingebrannt wird und dann der Vorgang auf der anderen Seite der Keramikperle wiederholt wird.

## Claims

1. A catalytically inactive gas detecting element for gas measuring instruments, consisting of a ceramic bead of fireproof material, enclosing a heating coil, in which a catalytically inactive coating is arranged on the bead, characterised in that
a) the ceramic bead (3) consists of a material which through drying and heating consists of a suspension with an up to 75 percent solids component of a metal oxide and a residual component of a mineral acid additive, and
b) the catalytically inactive coating is a glass coating (4), the linear expansion coefficient of which is matched to that of the ceramic bead (3).

2. A catalytically inactive gas detecting element according to Claim 1, characterised in that the solids component of the ceramic bead (3) is a mixture of α -aluminium monohydrate, in which at least 50 % of the particles have an average particle size smaller than 1 µm.

3. A catalytically inactive gas detecting element according to Claim 1 and 2, characterised in that the solids component of the ceramic bead (3) is a mixture of α -aluminium metahydroxide.

4. A catalytically inactive gas detecting element, characterised in that as glass coating (4) a frit is used, which has a firing-in temperature of preferably 800 to 900°C.

5. A method for the production of a catalytically inactive gas detecting element, characterised by the following process steps, that
a) a heating coil (2) is clamped in a carrier and has a suspension dripped thereon, which consists of an up to 75 percent solids component of a metal oxide and a residual component of a mineral acid additive, and is then dried and is also heated so as to be glowing red, in order to form a bead (3) of ceramic material, and
b) a protective glaze is dripped from above onto the ceramic bead (3) and is then fired in at a temperature of preferably 800 to 900°C and then the process is repeated on the other side of the ceramic bead.

## Revendications

1. Elément de capteur de gaz catalytiquement inactif, pour appareil de mesures gazeuses, se composant d'une perle en céramique en matériau résistant au feu, incluant un filament, un revêtement catalytiquement inactif étant disposé sur la perle, caractérisé en ce que
a. la perle (3) en céramique est constituée d'un matériau obtenu par séchage et chauffage d'une suspension comportant jusqu'à 75 % de portions de matières solides, d'un oxyde métallique, ainsi qu'en complément, un acide minéral, et
b. le revêtement catalytiquement inactif est un revêtement en verre (4) dont le coefficient de dilatation linéaire est adapté à celui de la perle (3) en céramique.

2. Elément de capteur de gaz catalytiquement inactif selon la revendication 1, caractérisé en ce que la fraction de matières solides de la perle (3) en céramique est un mélange de monohydrate d'aluminium α, dans lequel au moins 50 % des particules présentent une taille moyenne inférieure à 1 µm.

3. Elément de capteur inactif selon la revendication 1 ou 2, caractérisé en ce que la fraction en matières solides de la perle en céramique (3) est un mélange de métahydroxyde d'aluminium α.

4. Elément de capteur inactif, caractérisé en ce qu'on utilise comme revêtement en verre (4) une fritte qui présente une température de fusion de préférence entre 800 et 900°C.

5. Procédé de réalisation d'un élément de capteur de gaz catalytiquement inactif, caractérisé par les étapes suivantes :
a. on encastre, dans un support, un filament (2) que l'on humidifie au moyen d'une suspension se composant, jusqu'à 75 % en teneur en matières solides, d'un oxyde métallique, et d'un complément d'acide minéral, que l'on sèche ensuite et que l'on chauffe au rouge, pour former une perle (3) en matériau céramique
b. on humidifie la perle (3) en céramique à partir du dessus au moyen d'un vernissage de protection que l'on soumet à une combustion à une température de préférence entre 800 et 900°C, et on recommence le procédé sur l'autre côté de la perle en céramique.
